# EUROPEAN PATENT APPLICATION

(11) **EP 1 598 319 A2**
(43) Date of publication of application: **23.11.2005**
(21) Application number: 05103197.9
(22) Date of filing: 20.04.2005
(51) Int. Cl.: C02F 1/48, F02M 27/04

(54) **Magnetic polarizer**

(30) Priority: 30.04.2004 IT RM20040210
(71) Applicant: Ruggero, Vincenzo, 03044 Cervaro (FR) (IT)
(72) Inventor: Ruggero, Vincenzo, 03044 Cervaro (FR) (IT)
(74) Representative: Leone, Mario

(57) **Abstract**

A modular polarizer (1) utilized to create a permanent magnetic field and to induce an orientation of the molecular dipoles or to change the molecular configuration of fluids, of hydrocarbons and water in particular. The polarizer is shaped so as to define a passage channel for the fluid between the inner core (5) and a magnetic member (11), in direct contact therebetween.

## Description

The present invention relates to a modular polarizer for creating a permanent magnetic field apt to induce an orientation of the molecular dipoles and change the molecular configuration of fluids, of hydrocarbons and water in particular.

This type of devices is used in the field of manufacturing components for engine-driven vehicles and in particular in the production of fuel systems for engines of any type, for example internal combustion engines both gasoline engines and diesel engines.

The devices like the one proposed by the present invention can be also used in the fuel systems of burners and, generally, in all those systems wherein a combustion of fuels under the gaseous or liquid form, such as for example hydrocarbons, for water production is provided.

They are connected to the ducts of the fuel system, assembled downstream of pumping means and upstream of carburettors or, more generally, of means for injecting and vaporizing the fuel and the likes, however before the chambers wherein the combustion takes place.

Furthermore, after proper simple accommodations, the devices according to the present invention can be advantageously used for filtering the water which is made to recirculate in the heat exchangers or which, more generally, is utilized in ducts wherein formations of calcareous deposits or scales are wanted to be avoided or even removed.

In the current state of art devices have been proposed, which are generally called magnetic reactors, which officially aim at improving the effectiveness in the combustion of inner combustion engines and in burners in general or avoiding the formation of calcareous deposits in the ducts for the water transportation.

In most cases, compared to enthusiastic statements on the results, the real effectiveness of the devices implemented according to the currently used technologies and productive modes remains uncertain.

Up to now, the lack in reliable checks of the real convenience thereof and the small real advantages obtained by the application thereof discourages a systematic recourse to devices which are based upon the polarizing action of the magnets with the purposes mentioned above.

The advantages potentially shown by the polarization of liquid and gaseous fuels and of the water by means of magnets do not succeed in being conveniently and wholly exploited by the magnetic reactors as they are manufactured in the current state of art.

In particular, in order to obtain satisfying results, it is crucial the use of a sufficiently intense and pervading magnetic field to induce said polarization.

Nowadays magnetic reactors are used which let the fluid to be polarized to pass according to a simply linear route.

In this case, the running speed of fluids inside the channels obtained in the magnetic reactors and the relative stay time inside thereof are so that the outflowing fluids are not polarized effectively.

Apart from that, the geometries according thereto the magnets are implemented, mainly rectangular, and the modes wherein they are arranged and combined along the above-mentioned linear routes obtained in the rectangular reactors do not allow the magnetic field to be sufficiently invasive.

The technical problem underlying the present invention is to provide a modular polarizer for creating a permanent magnetic field apt to induce an orientation of the molecular dipoles and to change the molecular configuration of fluids, of hydrocarbons and water in particular, so as to allow obviating to the drawbacks shown by the mentioned known art.

Such problem is solved by a polarizer as defined in claim 1.

It is known that the magnetic field has an intensity inversely proportional to the square of the distance from the magnet.

Therefore, it can be realized that if a considerable intensity of the magnetic field is wanted to be obtained in order to induce the polarization of the fluids, the flow of the fluids themselves has to be as closest as possible to the sources of the magnetic field, in case in contact with them.

At the same time, the device according to the present invention allows the fluid flow to be in direct contact with the magnets.

Apart from this, the length of the fluids' magnetizing route is considerably increased.

In fact, the fluid flow is directed and forced to follow a variously tortuous route around the core introduced in the magnets' cavity.

This inevitably implies much longer stay time in the polarizer and much more exposure time to the magnetic field concentrated therein compared to the ones obtained in the devices according to the state of art.

The geometrical features of the passage channels for the fluids are so as to favour the formation of turbulent whirling motions inside the fluids themselves.

The intense remixing following this fluidodynamic condition helps in obtaining a deeper and complete polarization effect onto fluids.

Furthermore, the introduction of a ferromagnetic core with complementary section with respect to the one of the hollow magnets involves the creation of a magnetic field, the force lines thereof, as in the case of the magnetic reactors implemented according to the state of art, do not merely have the longitude direction parallel to the fluid flow or transverse perpendicular to said flow.

In fact, the most important advantage of a polarizer according to the present invention lies in the fact that the force lines of the generated magnetic field are oriented towards all radial directions.

This involves better invasive and penetrating capabilities of the magnetic field.

These and other advantages, features and utilization modes of the present invention will be evident from the following description of several preferred embodiments, shown by way of example and not for limitative purposes with reference to the enclosed drawings wherein:
- figure 1 is an exploded and perspective view of a first embodiment of the polarizer according to the present invention;
- figure 2 is a perspective view of the polarizer according to the embodiment of figure 1;
- figure 3 is a perspective view of the polarizer according to the present invention as it appears from the outside in operational configuration;
- figure 4 is a partially cross-sectional view of the polarizer according to the embodiment of figure 1;
- figures from 5A to 5H represent a plurality of plan and perspective views, respectively, of hollow magnetic members with axial symmetry, according to the present invention;
- figure 6 is an exploded and perspective view of a second embodiment of the polarizer according to the present invention;
- figure 7 is a partially cross-sectional view of the polarizer according to the embodiment of figure 6;
- figure 8 is a perspective view with partial and exploded section of a third embodiment of the polarizer according to the present invention;
- figure 9 is a partially cross-sectional view of the polarizer according to the embodiment of figure 8;
- figure 10 is a perspective view with partial and exploded section of a fourth embodiment of the polarizer according to the present invention;
- figure 11 is a partially cross-sectional view of the polarizer according to the embodiment of figure 10;
- figure 12 is an exploded and perspective view of a fifth embodiment of the polarizer according to the present invention;
- figure 13 is a perspective view of the polarizer according to the embodiment of figure 12, when the outer main body is closed; and
- figure 14 shows an examination report of the exhaust fumes.

For a better comprehension of the operation of the polarizer according to the present invention, it is useful illustrating briefly the theoretical basis thereto the ideation of such device refers.

The molecules of the chemical elements have their own magnetic moment and the valence electrons, upon rotating, generate weak magnetic fields. Consequently, weak magnetic forces are established.

In the molecules of fluids in general, as gases and liquids, such weak forces, called Van Der Waals' forces, have an influence radius in the order of the intermolecular space.

For this reason, the fuel molecules, for example of the hydrocarbons, aggregate in bunches by originating long chains of molecules.

Such linkages, due to electromagnetic forces, would prevent a combination according to optimum ratios of the oxidizing oxygen with the fuel's carbon and hydrogen atoms.

A polarizer according to the present invention, by means of its own magnetic field, is able to induce changes in the orientation of the dipoles inside the molecules, which thus compensate the creation of an angular moment no more equal to zero on the average due to the magnetic field itself.

Such changes in orientation act at the level of the forces of molecular linkages, by reducing them or by weakening them, and of the molecular configuration, by breaking down the mentioned aggregations in bunches (cracking) and creating a situation favourable to the oxygen reaction with the fuel.

A more complete combustion also involves better efficiency of the engines, highest performances, fuel saving, elimination of the polluting loads as well as a reduction in the soot deposition onto the exchange surfaces together with an improved thermal exchange and a reduction in maintenance costs.

In particular, the emissions of compounds highly pollutant for the atmosphere, such as the CO carbon monoxide or various nitrogen oxides NOx and HC which, unburnt, originate toxic smogs, are drastically reduced.

In the case of utilization for ducts transporting water, a magnetic field like the one generated by a polarizer according to the present invention also prevents that the calcium carbonate existing in the water deposits in calcareous scales onto the metallic surfaces.

Such results are obtained thanks to the fact that the magnetic field modifies the crystalline structure of the calcium carbonate existing in the water so that such structure does not show the calcite's crystalline structure, stable under ambient temperature and pressure and cause of the scales, on the contrary it shows the aragonite allotropic shape.

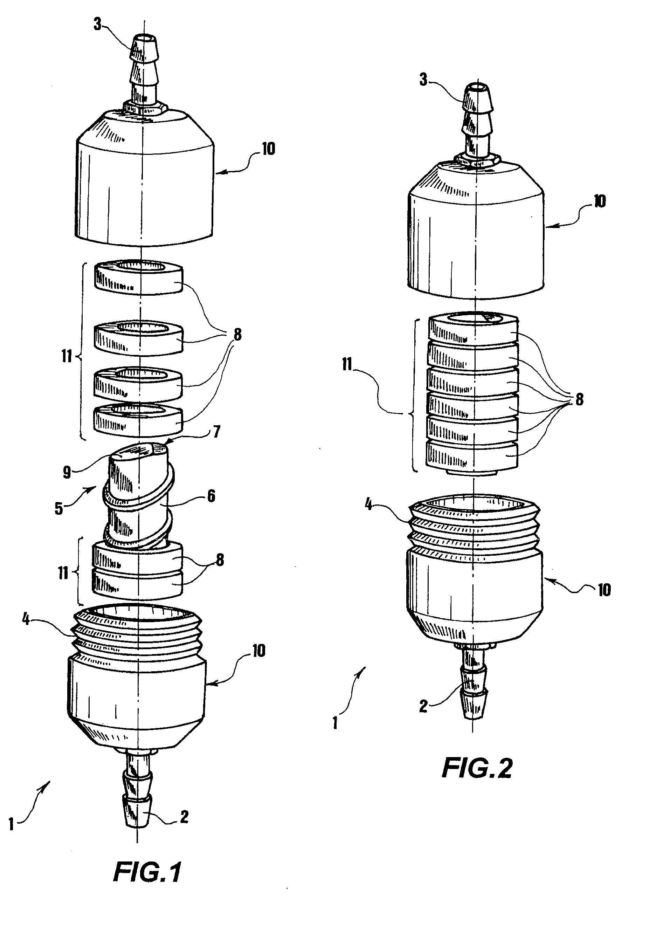

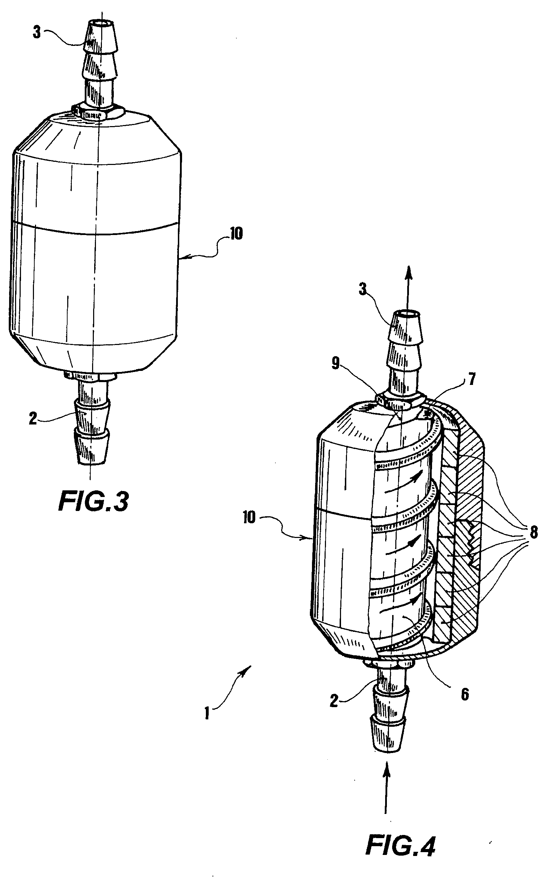

By referring to Figures 1, 2, 3 e 4, a first embodiment of the polarizer according to the present invention has a outer main body 10 which can be opened.

Such outer main body is preferably made of ferromagnetic metal so that the force lines of the magnetic field created inside thereof can close thereon.

In fact, for the polarization of fluids only the intensity of the magnetic field concentrated onto the flow of the fluids themselves is important and, however, it is preferable that such field does not affect components or apparatuses outside the polarizer.

At the ends of the main body 10 inlet 2 and outlet 3 doors of the fluids are obtained, arranged for a sealing assembly, for example by interference, to the feeding ducts of the fluids themselves.

In this embodiment, the outer body can be opened in two caps which can be screwed therebetween by means of a thread 4.

A plurality of permanent magnets 8, constituted by a series of preferably circular rings, is assembled one near the other, to form a magnetic member 11 with a shape having an axial symmetry, around a core 5 made of ferromagnetic material.

Such core 5 has a section complementary to the cavities of the rings 8 wherein it is inserted and a groove 6, for example shaped like a helicoid, has been obtained thereon, winding around the core itself.

Obviously, it is to be meant that different grooves having respective starts can be obtained onto the core 5.

The groove 6, together with the inner surface of the rings 8, defines a first passage channel for the fluids inserted in the polarizer.

The fluids, entered from the door 2, are directed into the passage channel mentioned above, by means of suitable facilitating passages 9 onto the extreme sections 7 of the core 5, and they are conditioned to follow a more or less tortuous route inside the polarizer.

Such facilitating passages 9 can be implemented, for example, by tilting portions of the extreme sections 7 of the core 5 or by making some notches in the extreme sections 7 themselves.

Whereas the fluid flows linearly inside the magnetic reactors implemented according to the state of art, in the case of the present invention the fluids' flow is channelled so that the relative stay time in the region of the device 1, wherein the magnetic field is concentrated, in direct contact with the permanent magnets 8, is much longer.

According to the present invention, the fluids' flow follows a variously tortuous route and it remains subjected to the polarizing action of a radial magnetic field for a period of time proportional to an equivalent length L' equal to 2πnR, wherein n is the number of the helix "windings" onto a cylindrical core 5 having radius R.

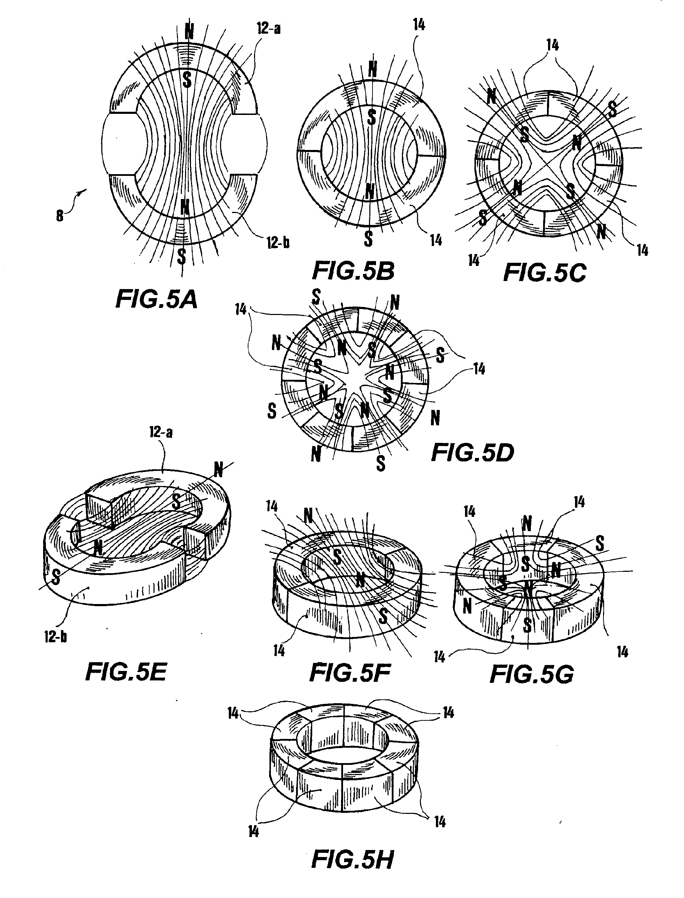

By referring to the figures 5A and 5E, each one of the permanent magnets 8 shaped like a circular ring can be divided into two or more portions 12-a; 12-b; such portions are magnetized so as to attract one onto the other, by coupling according to opposed polarities, to form an annular magnets.

Alternatively, each one of said ring-like permanent magnets 8 can include, for example, a plurality of sectors 14, each one of such sectors 14 having an opposed magnetization with respect to the one of the adjacent sectors, as illustrated in the plan figures 5B,5C and 5D and in the respective corresponding perspective views 5F,5G and 5H.

In each case, the magnetization of the magnets 8 is so as to generate a substantially radial inner magnetic field.

The magnetic member 11, like the permanent magnets 8 as well, has a chemical composition advantageously containing rare earths as neodymium, samarium, praseodymium or the like, with variable concentrations so as to guarantee, in any case, an intensity of the radial magnetic field, in the sections of the polarizer wherein it is most concentrated, in a range of 10,000-15,000 Gauss.

The mentioned rare earths have the property of maintaining their own features of residual magnetization, acquired after appropriate cycles of magnetic hysteresis, even if exposed to very high temperatures.

For example, neodymium has a Curie Temperature of about 310-360°C; samarium keeps the force of its own magnetic field until 720-825°C.

This is particularly advantageous for components which are next to chambers wherein strongly exothermic reactions, such as combustion, take place, especially by taking into consideration the fact that the devices of known art have a definitely lower Curie Temperature, on the average, therefore the demagnetization occurs around 60-70 °C, by reducing or annulling the device effectiveness.

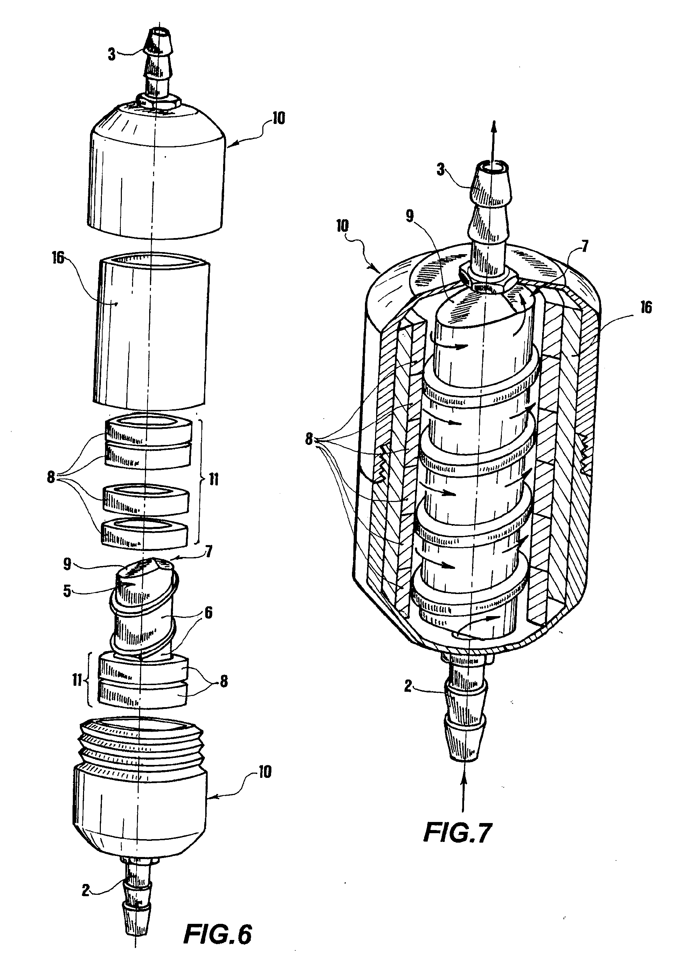

By referring to figures 6 and 7, a second embodiment of the present invention provides the interposition, between permanent magnets 8 and outer body 10, of an containment intermediate member 16, in the specific case represented in figure 7 in direct contact with the permanent magnets 8 onto the inner surface as well as with the outer body 10 onto the outer surface.

Such intermediate member 16 preferably is made of ferromagnetic material and it plays the role of closing the force lines of the magnetic field onto itself, by avoiding a not necessary dispersion outside the polarizer 1.

In this case, the outer body is preferably made of paramagnetic light alloy, for example aluminium.

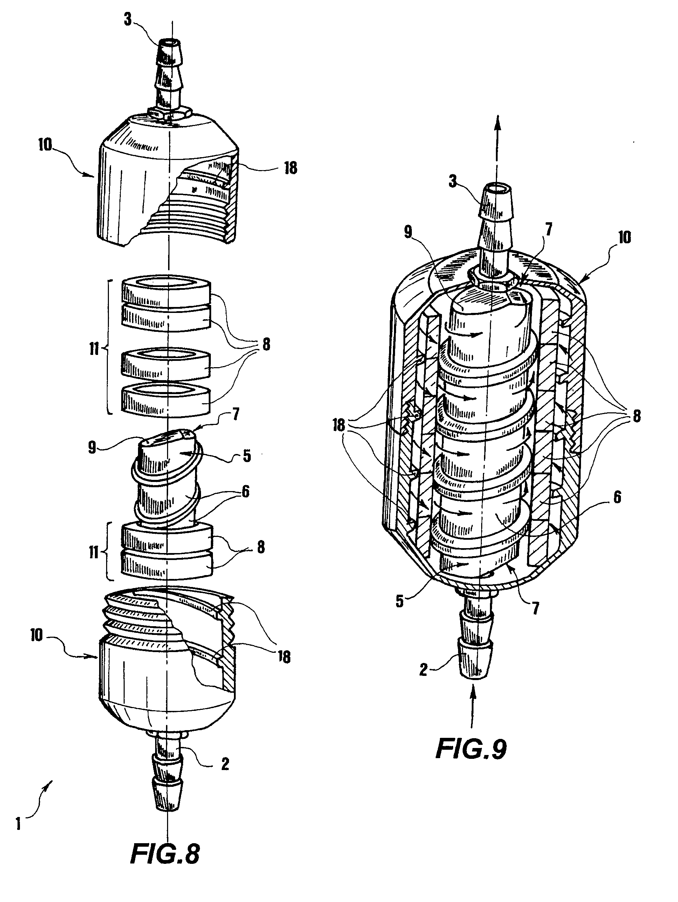

Figure 8 and figure 9 illustrate a third embodiment of the polarizer according to the present invention.

A second helicoid-like groove 18 is obtained onto the inner surface of the main body 10, the arrangement being so that the main body 10 and the ring-like permanent magnets 8 define a second passage channel for the fluid, delimited by the groove 18 itself and by the outer surface of the permanent magnets 8.

This double-flow optional configuration allows the discharge and the polarization of greater fluid rates.

A variant of this third embodiment of the present invention, not illustrated in the figures of the enclosed drawings, but equally possible, is the one wherein, a helicoid-like groove is obtained onto the inner surface of the containment intermediate, preferably ferromagnetic, member 16 in direct contact with the permanent magnets 8 as well as with the outer body 10. A flow along a third channel created by said groove and by the outer surface of the permanent magnets 8 is added in parallel to the fluid flow which is discharged from the channel between the core 5 and the magnetic rings 8.

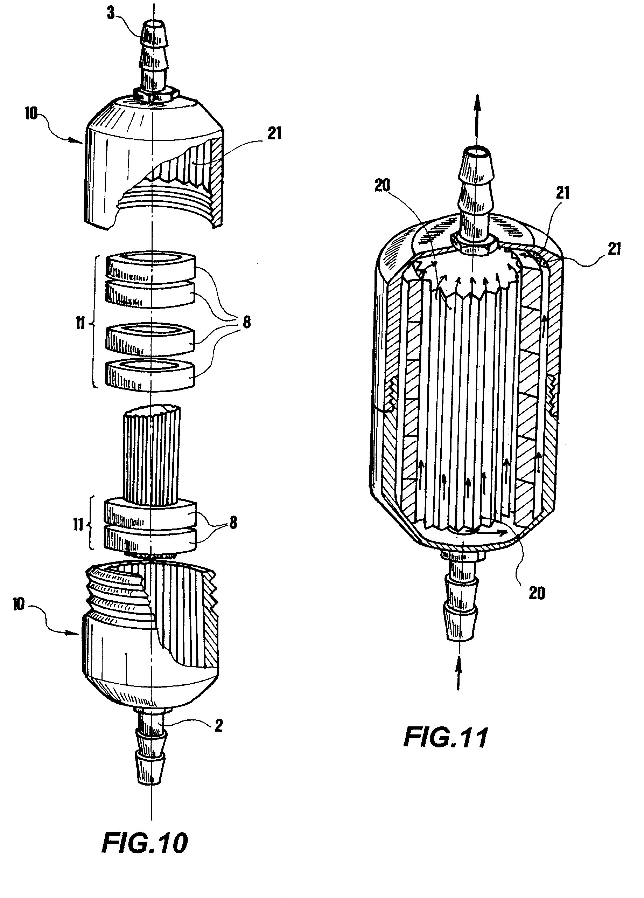

Figures 10 and 11 illustrate an additional fourth embodiment of the present invention, still according to the double-flow mode.

In this case the additional flow is provided both within the grooves 21 obtained onto the outer body 10 and the permanent magnets 8.

In the case in point, longitudinal grooves 21 with triangular section have been obtained, for example by milling, onto the outer body 10.

Rather than shaping the groove of the core 5 like a helicoid wound therearound, longitudinal grooves 20 with triangular section have been obtained even onto the core 5.

The double flow, in this case, is linear and it flows parallel to the axis of the polarizer 1.

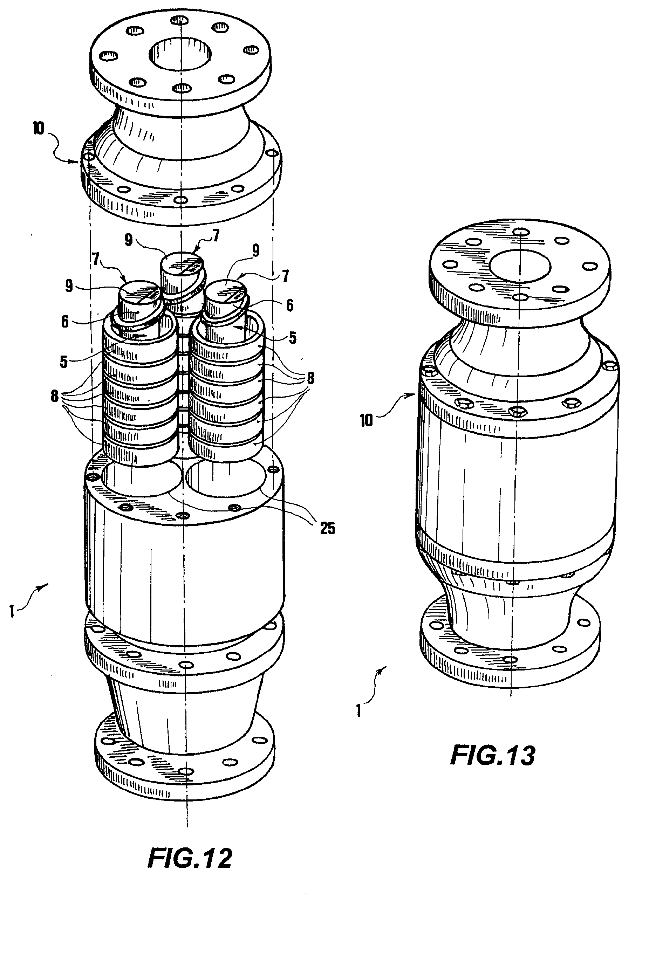

Figures 12 and 13 relate to a fifth embodiment which exploits the modularity of the present invention in an ingenious way, particularly suitable, shaped in this way, for the polarization and for the discharge of huge rates of fluids.

According to this embodiment, an intermediate flange 30, having two or more thorough holes 25, is mounted, by means of connecting means which can be disassembled, between the caps at the ends of the outer main body 10.

Each of the holes 25 is arranged to house a corresponding hollow magnetic member 11, in case constituted by several ring-like permanent magnets 8, together with a respective core 5.

The total flow of fluids divides onto a plurality of polarization routes related to each respective core 5.

### EXPERIMENTAL RESULTS

To support the effectiveness of the polarizer according to the present invention in improving the performances, reducing the fuel consumption, diminishing the fume opacity and eliminating the polluting loads, the results of some experiments and bench tests carried out in laboratories according to the laws in force are shown hereinafter.

In particular, within the structures of a laboratory for analyzing the exhaust gases, the emissions of a Diesel motor-vehicle, in the case in point of a BMW 330 d, have been detected. For this case, the results related to a mixed cycle according to the MVEG standard, under the conditions and according to the parameters specified in the enclosed tables, have been registered.

In particular, table 1 relates to the detected values of the exhaust emissions of the vehicle if a polarizer according to the present invention has been mounted in the fuel system of this vehicle.

Table 2, instead, relates to the values obtained if the vehicle has not being equipped with the polarizer according to the present invention.

In table 3 a summarizing diagramme is shown allowing an immediate compared analysis of the data collected corresponding to the tests carried out before and after the device installation.

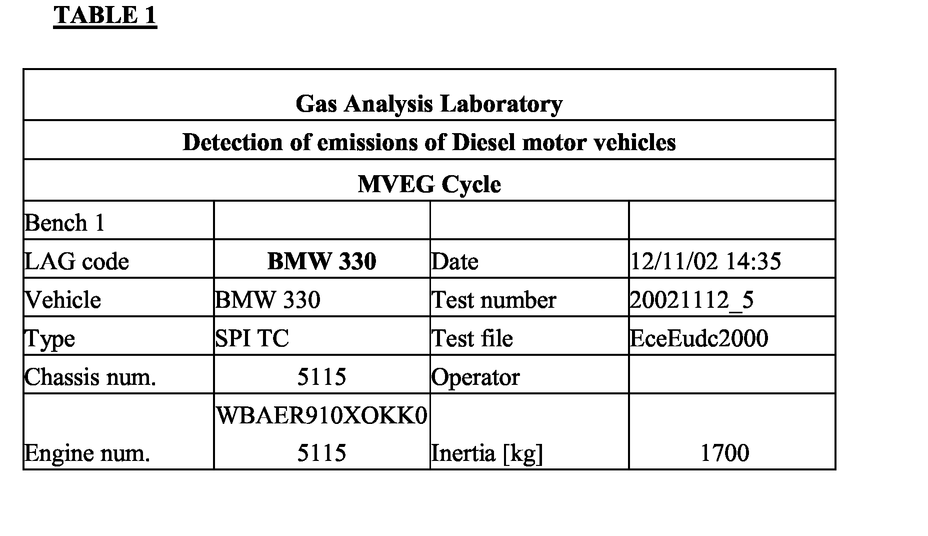

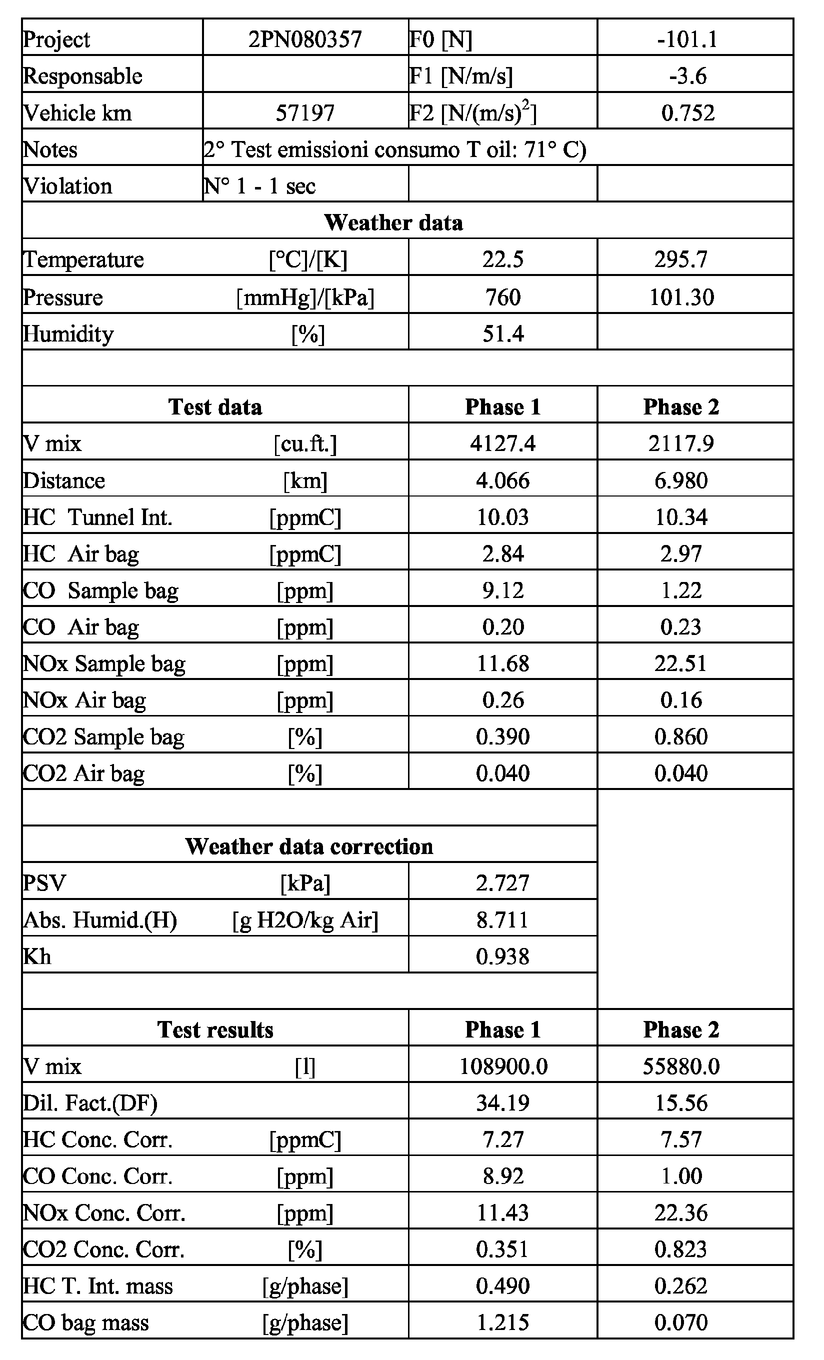

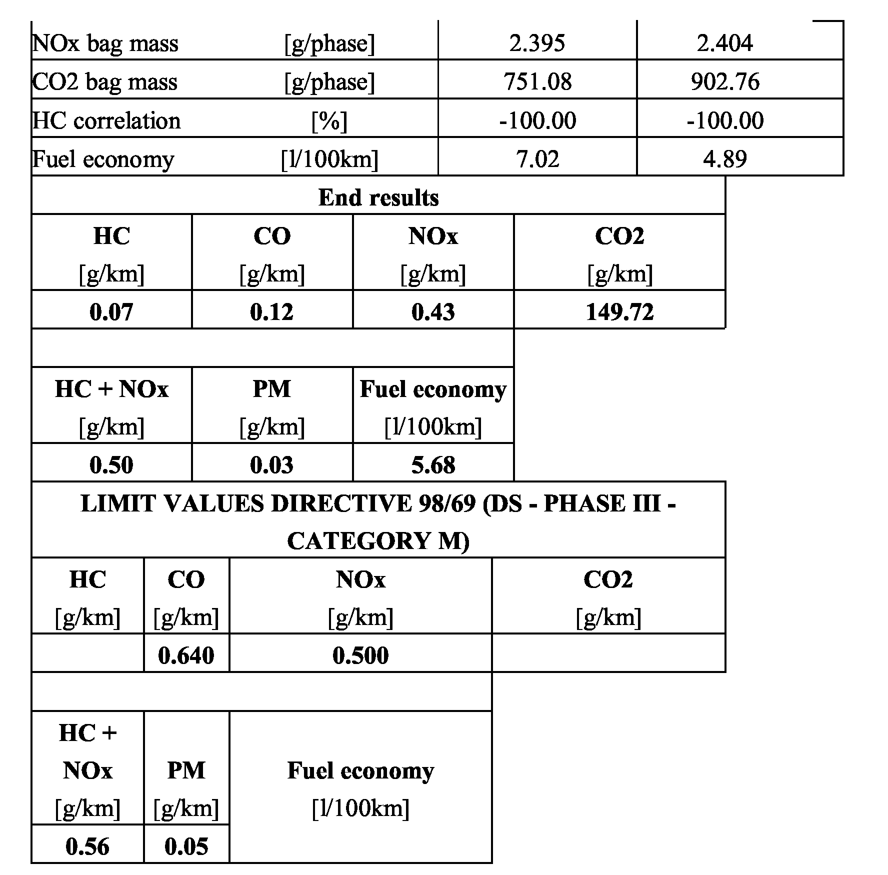

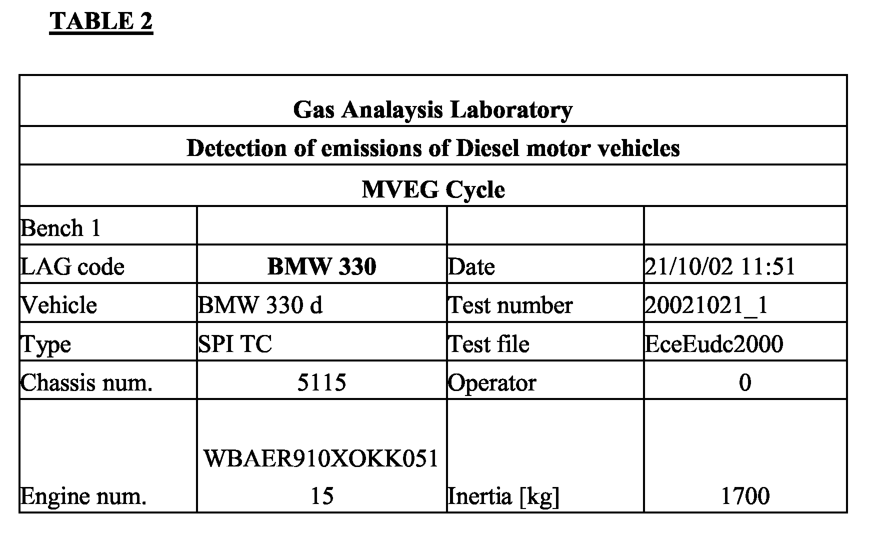

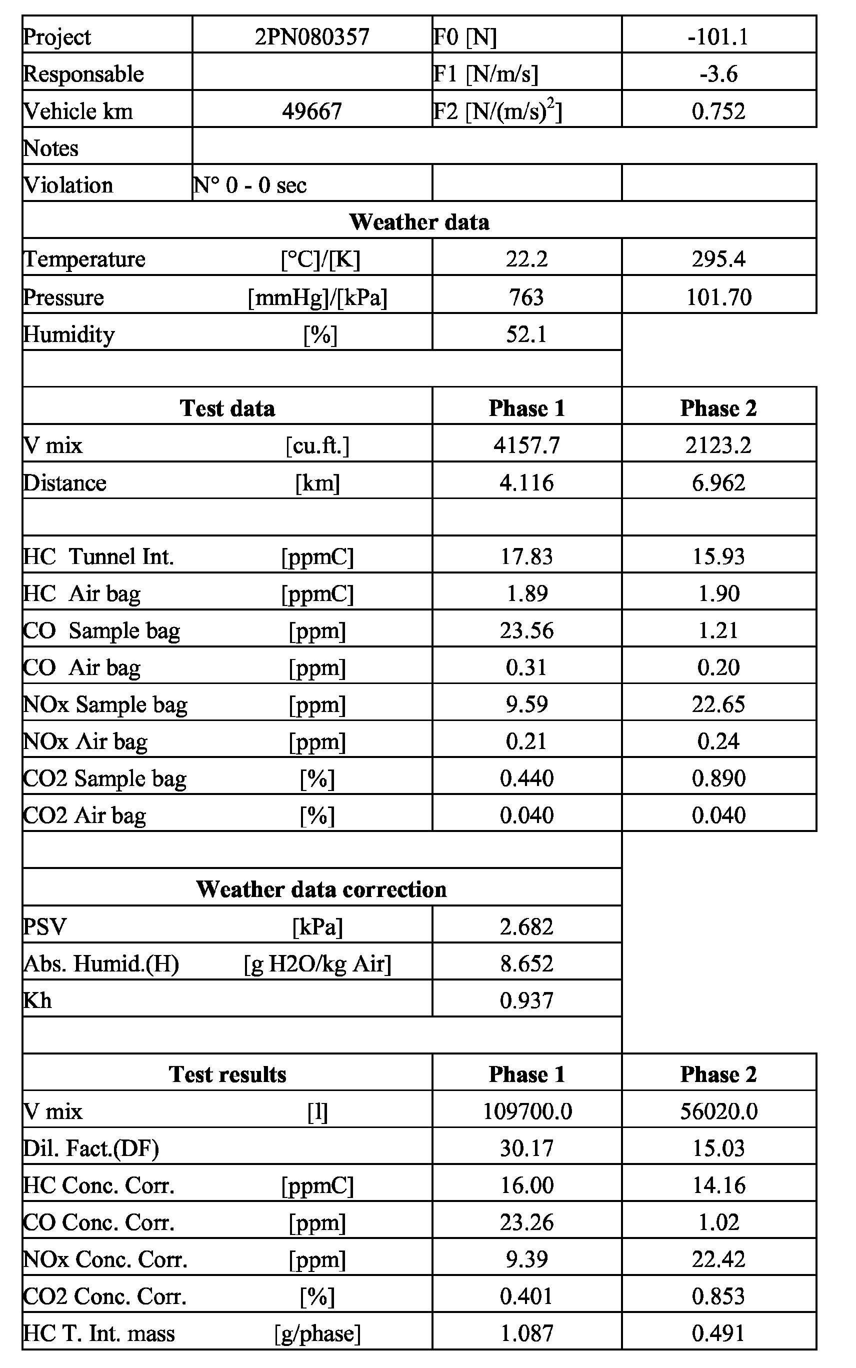

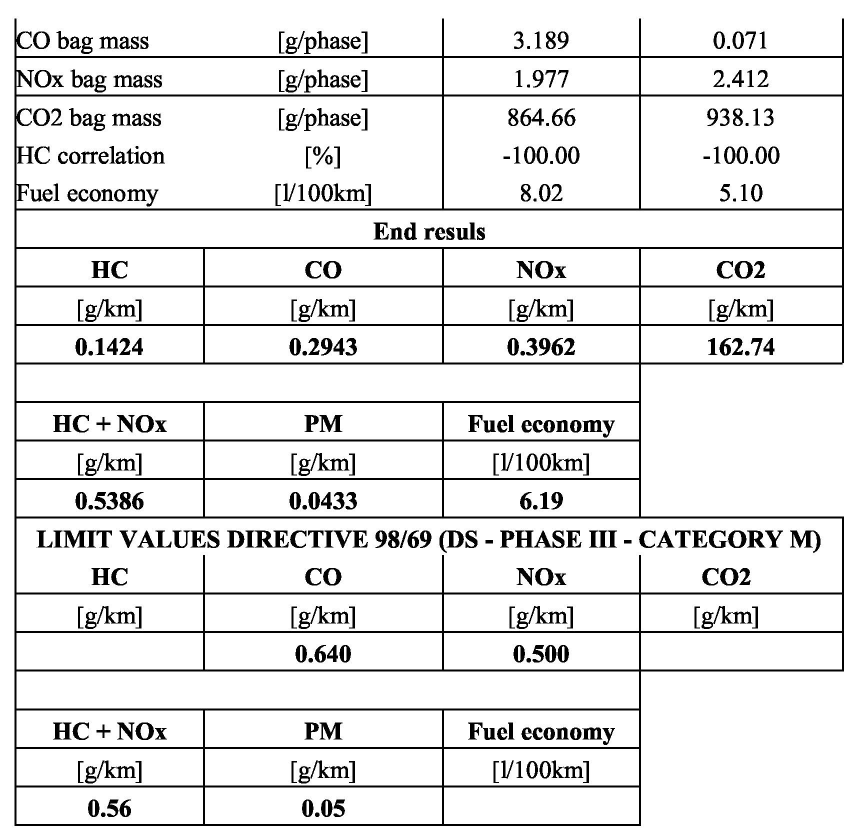

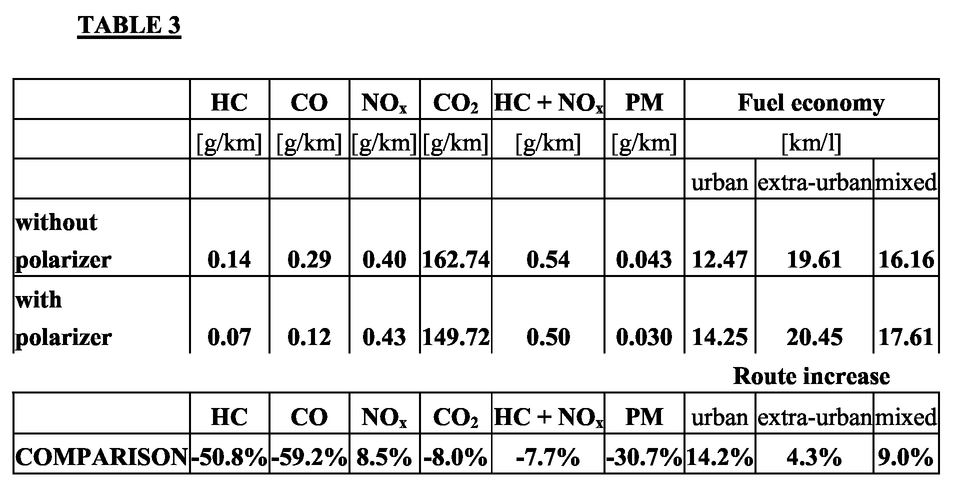

Furthermore, lots and lots of tests for measuring the opacity of the exhaust fumes carried out onto different vehicles demonstrate that the use of the a device according to the present invention allows reducing the opacity values in a range varying from 30% to 80% (depending upon the type and the state of the tested vehicle).

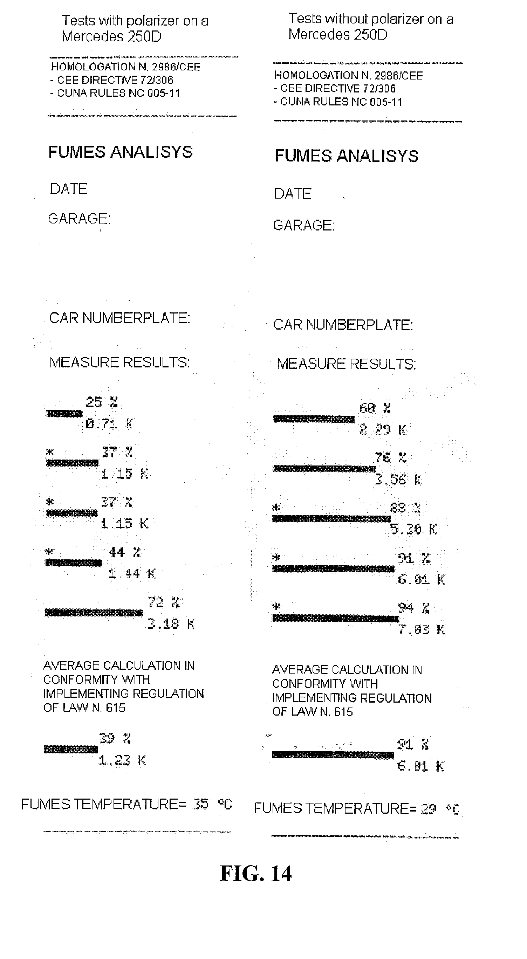

By way of example only, figure 14 shows an examination report related to the opacity measurement of the fumes of a Mercedes 250D motor vehicle therefrom it can be deduced that the installation of the polarizer according to the present invention has lead to the elimination of the polluting loads even beyond the system itself, until obtaining a huge reduction in the polluting emissions.

To the above-described modular polarizer a person skilled in the art, in order to satisfy additional and contingent needs, could introduce several additional embodiment modifications and variants, all however comprised within the protective scope of the present invention, as defined by the enclosed claims.

## Claims

1. A modular magnetic polarizer (1) apt to induce an orientation of the molecular dipoles and/or to change the molecular configuration of fluids, of hydrocarbons and water in particular, comprising:
- an outer hollow main body (10) which can be opened;
- inlet (2) and outlet (3) doors obtained onto said main body (10) for the passage of said fluids; and
- a hollow magnetic member (11) with a substantially tubular shape having a cavity with axial symmetry, inside said main body (10),
**characterized in that** it comprises:
- a core (5) made of ferromagnetic material, apt to be inserted in the cavity of said magnetic member (11), with section complementary to the cavity of said hollow magnetic member (11) and onto the outer surface thereof at least a first groove (6) is obtained,
the arrangement being so that said core (5) and said magnetic member (11) are in direct contact, by defining a first passage channel for said fluid, said channel being delimited by said groove (6) and by the inner surface of said magnetic member (11).

2. The modular magnetic polarizer (1) according to claim 1, wherein said core (5) comprises extreme sections (7) shaped so as to facilitate the passage of said inletting and outletting fluid.

3. The modular magnetic polarizer according to the preceding claim, wherein said extreme sections (7) comprise facilitating passages for the fluid.

4. The modular magnetic polarizer according to the preceding claim, wherein said extreme sections (7) have a tilted portion (9).

5. The modular polarizer according to claim 3, wherein said extreme sections (7) have one or more notches for the fluid passage.

6. The modular magnetic polarizer (1) according to any of the preceding claims, wherein said main body (10) is in direct contact with the outer surface of said magnetic member (11).

7. The modular magnetic polarizer according to claim 4, wherein a second groove (18) is obtained onto the inner surface of main body (10), the arrangement being so that said main body (10) and said magnetic member (11) define a second passage channel for said fluid, said channel being delimited by said groove (18) and by the inner surface of said magnetic member (11).

8. The modular magnetic polarizer according to any of the claims 1 to 5, comprising a containment intermediate member (16) interposed between said main body (10) and said magnetic member (11).

9. The modular magnetic polarizer (1) according to claim 8, wherein a third groove is obtained onto the inner surface of said containment intermediate member (16), the arrangement being so that said containment intermediate member (16) and said magnetic member (11) define a third passage channel for said fluid delimited by said groove and by the inner surface of said containment intermediate member (16).

10. The modular magnetic polarizer (1) according to any of the preceding claims, wherein said at least one magnetic member (11) comprises a plurality of hollow permanent magnets (8) with axial symmetry, each of such permanent magnets (8) being adjacent to a subsequent one.

11. The modular magnetic polarizer (1) according to the preceding claim, wherein each of said permanent magnets (8) is divided into two or more portions (12-a; 12-b), such portions being magnetized so as to attract one onto the other, by coupling according to opposed polarities.

12. The modular magnetic polarizer (1) according to claim 10 or 11, wherein each of said permanent magnets (8) includes a plurality of sectors (14), each of such sectors (14) having a magnetization opposed with respect to the one of the adjacent sectors.

13. The modular magnetic polarizer (1) according to any of the claims 10 to 12, wherein said permanent magnets (8) are circular rings.

14. The modular magnetic polarizer (1) according to any of the preceding claims, wherein said first groove (6) is substantially shaped like a helix wound around said core (5).

15. The modular magnetic polarizer (1) according to any of the claims 1 to 13, wherein a plurality of longitudinal grooves with triangular section (20) is obtained onto the surface of said core (20).

16. The modular magnetic polarizer (1) according to any of the claims 7 to 15, wherein said second groove (18) is substantially shaped like a helix wound onto the inner surface of said main body (10).

17. The modular magnetic polarizer (1) according to any of the claims 1 to 15, wherein a plurality of longitudinal grooves with triangular section (21) is obtained onto the surface of said main body (10).

18. The modular magnetic polarizer (1) according to any of the preceding claims, wherein said main body (10) is made of aluminium or a ferromagnetic material.

19. The modular magnetic polarizer (1) according to any of the claims 8 to 18, wherein said containment intermediate member (16) is made of ferromagnetic material.

20. The modular magnetic polarizer (1) according to any of the preceding claims, comprising an intermediate flange (30) having two or more through holes (25), each one of said holes (25) being apt to house a corresponding hollow magnetic member (11) together with a respective core (5).

21. The modular magnetic polarizer (1) according to any of the preceding claims, wherein the magnetic member (11) and/or the permanent magnets (8) have chemical composition comprising rare earths such as neodymium, samarium, praseodymium or the likes.
